Europäisches Patentamt

European Patent Office

Office européen des brevets

(19)

(11) Publication number: **0 252 374**
**A1**

(12) # EUROPEAN PATENT APPLICATION

(21) Application number: **87109126.0**

(22) Date of filing: **25.06.87**

(51) Int. Cl.⁴: **A23P 1/04** , **A23L 1/22** , **A23L 1/236** , **A23G 3/30**

(30) Priority: **25.06.86 US 878468**

(43) Date of publication of application: **13.01.88 Bulletin 88/02**

(84) Designated Contracting States:
**AT BE CH DE ES FR GB IT LI NL**

(71) Applicant: **NABISCO BRANDS, INC.**
**100 DeForest Avenue**
**East Hanover New Jersey 07936(US)**

(72) Inventor: **Hopkins, Walter R.**
**1637 Mark Drive**
**Bridgewater New Jersey(US)**
Inventor: **Carroll, Thomas J.**
**RR4 Box 65 Colonial Oaks Drive**
**Oak Ridge New Jersey(US)**

(74) Representative: **Hansen, Bernd, Dr.rer.nat. et al**
**Hoffmann, Eitle & Partner Patentanwälte**
**Arabellastrasse 4**
**D-8000 München 81(DE)**

(54) **Encapsulated actice ingredients, process for preparing them and their use in ingested products.**

(57) Storage stable active comestible ingredients encapsulated with water insoluble polymer material and having accelerated active ingredient release properties are prepared by admixing the active ingredient and/or the polymer material with deoiled lecithin and then encapsulating the active ingredient. The encapsulated compositions are used to provide accelerated up-front release of the active ingredients in orally ingested solid products such as foods, confections, chewing gum and dentifrices.

EP 0 252 374 A1

# ENCAPSULATED ACTIVE INGREDIENTS, PROCESS FOR PREPARING THEM AND THEIR USE IN INGESTED PRODUCTS

The present invention relates to the encapsulation of food-grade type active ingredients such as intense sweeteners, such as aspartame, in such a way as to enable them to be more efficiently used in various types of ingested products.

U.S. 4,384,004 discloses the use, in food products such as breakfast cereals, dairy product analog toppings, chewing gums and candies, of L-aspartyl-L-phenylalanine methyl ester, or aspartame, in encapsulated form. The aspartame is used alone, as the sole sweetener, or in combination with other sweetening agents. The encapsulation of the aspartame renders it storage stable and provides for a longer flavor or sweetness release time when the encapsulated sweetener, when used in a product such as chewing gum, is masticated in the oral cavity. When employing the technology of U.S. 4,384,004 for making encapsulated aspartame for use in chewing gum, however, it has been found necessary, in order to obtain the desired shelf life stability for the aspartame, to preferably use, as the encapsulating agents, coatings of water insoluble materials such as polyethylene. Further, these water insoluble encapsulating agents must be used at such relatively high coating levels, of about 40 to 50% by weight, relative to the amount of aspartame being used, as to prevent any significant "up-front flavor burst" from being provided by the aspartame to the user of the chewing gum products.

By "up-front flavor burst" is meant the burst of flavor obtained in the first few minutes of chewing the chewing gum product made with the encapsulated aspartame. These "first few minutes" amount to about 1 to 4 minutes in the case of sugarless chewing gum, and about 1 to 6 minutes in the case of sugar sweetened chewing gum. No significant amount of sweetening sensation is readily obtainable from the encapsulated aspartame, when using the thickly encapsulated aspartame materials, until after about 1 to 8 minutes into the chewing life of the product. This is deemed unacceptable commercially. From a commercial point of view a product such as chewing gum should provide both a relatively large or pronounced initial flavor impact for the chewing gum user, within the first 1 to 5 minutes of such use, as well as a, further, prolonged flavor release over the next 5 to 20 minutes or more of sustained chewing time. There should be little or no hiatus between the "up-front flavor burst" and any subsequent release of flavor impact.

The initial flavor burst is usually provided by the use of unencapsulated bulk sweeteners.

U.S. 3,929,988 discloses the use in certain dentifrices of encapsulated admixtures of APM and certain acids.

Lecithin has been used as a softening agent in chewing gum formulations. When used for such purposes it has an oil (acetone soluble fraction) content of about 2 to 40% by weight.

Prior to the present invention, therefore, it has not been possible to readily encapsulate aspartame, and other intense sweeteners, and particularly with a polyolefin encapsulating agent, in food products such as chewing gum, which is also sweetened with an unencapsulated bulk sweetener, as to provide for both an initial, up-front, pronounced burst of flavor and a second sustained prolonged flavor release, without having to experience a hiatus of about 3 to 8 minutes between the end of the up-front flavor burst and the onset of any subsequent release of flavor impact resulting from the release of the encapsulated intense sweetener.

The present invention relates to an encapsulated composition comprising at least one active comestible ingredient encapsulated in a water insoluble film forming polymer material and wherein said active comestible ingredient and/or said polymer material are admixed with deoiled lecithin.

The present invention also relates to a process for encapsulating active comestible ingredient with water insoluble film forming polymer material the improvement comprising admixing said active comestible ingredient and/or said polymer material with deoiled lecithin prior to said encapsulation.

The present invention provides an encapsulated form of intense sweetener which may be used with unencapsulated bulk sweeteners in products such as chewing gum so as to avoid any hiatus between the end of the up-front flavor burst provided by the bulk sweetener and the onset of a subsequent flavor burst provided by the encapsulated intense sweetener, when the latter is masticated in such products by the user thereof.

In the accompanying drawings Figure I is a graph depicting and comparing the sweetness retention properties of various prior art chewing products with those of the present invention.

Figure II is a graph depicting and comparing the flavor retention properties of various prior art chewing gum products with those of the present invention.

## Intense Sweetener

The intense, or artificial, or non-nutritive, sweeteners which may be used in the encapsulated compositions of the present invention would include poorly water-soluble, as well as water-soluble, sweeteners such as aspartame or L-aspartyl-L-phenylalanine methyl ester, the free acid form of saccharin, sodium, calcium or ammonium saccharin salts, dihydrochalcones, glycyrrhizin, dipotassium glycyrrhizin, glycyrrhizic acid/ammonium salt, talin, acesulfame K, as well as Stevia Rebaudiana (Stevioside), Richardella dulcifica or Synsepalum dulcificum (Miracle Berry), Dioscoreophyllum cumminisii (Serendipity Berry), free cyclamic acid and cyclamate salts, and the like, or mixtures of any two or more of the above.

The preferred of such intense sweeteners, for the purposes of the present invention are the L-aspartic acid derivatives and, as noted above, the most preferred L-aspartic acid derivatives to be used in this regard is L-aspartyl-L-phenylalanine methyl ester, known as aspartame. Other L-aspartic acid sweetening derivatives may also be used. Such derivatives are disclosed in U.S. Patent No. 3,955,000 at column 3, line 63 to column 4, line 35, the disclosure of which is incorporated herein by reference. The following description will be directed to aspartame as representative of the L-aspartic acid derivatives with the understanding that the other L-aspartic acid sweetening derivatives may be used in lieu of and/or in addition to the aspartame. These compounds are also known as dipeptides.

Other flavorants and/or other active ingredients which may be encapsulated with the encapsulating system of the present invention would include solid particulate materials such as acidulents, such as, citric acid, fumaric acid, adipic acid, succinic acid, malic acid and maleic acid; spices; spray dried flavoring materials such as oil based natural or synthetic flavorants such as those derived from plants, leaves, flowers and fruit. Representative flavors and oils of these types include citrus oils such as lemon oil, orange oil, lime oil and grapefruit oil; fruit essences, such as apple essence, pear essence, peach essence, strawberry essence, apricot essence, raspberry essence, cherry essence, plum essence and pineapple essence; essential oils such as peppermint oil, spearmint oil, mixtures of peppermint oil and spearmint oil, clove oil, bay oil, anise oil, eucalyptus oil, thyme oil, cedar leaf oil, cinnamon oil, oil of nutmeg, oil of sage, oil of bitter almonds, cassia oil and methylsalicylate (oil of wintergreen).

## The Encapsulating Agents

The encapsulating agents which may be used in forming the encapsulated compositions of the present invention would include all film forming water insoluble polymers.

The film forming polymers must, of course be non-toxic and of food grade quality. They must be water insoluble, i.e., in water at temperatures of at least 25°C, they must not swell more than about 30% by volume nor have a solubility in water of more than about 10% by weight. They must be capable of forming films in the encapsulating processes disclosed herein. The preferred of such polymers are organic polymers, i.e., those having a carbon backbone, and more preferably the olefin polymers, and most preferably polyolefins. The film forming polymers should also be chemically compatible with the deoiled lecithin, or other modifying agents used therewith, and the encapsulated flavorant, i.e., they should not undergo a chemical reaction therewith under the encapsulating and use conditions employed therewith.

The olefin polymers would include polymers containing at least 50 mol percent of one or more olefin monomers. The remainder of such olefin polymers could include up to 50 mol percent of one or more non-olefin monomers that are copolymerizable with the olefins, such as other vinyl monomers, such as vinyl esters, vinyl ethers and vinyl alcohol and acrylic monomers. These other vinyl monomers would thus include vinyl acetate, vinyl propionate, vinyl butyrate, vinyl ether, vinyl alcohol, acrylic acid, methacrylic acid, ethyl acrylate, ethyl methacrylate, methyl acrylate, and methylmethacrylate.

The polyolefins would include olefin homopolymers such as polyethylene and polypropylene and olefin copolymers of two or more olefin monomers such as ethylene propylene copolymers

## Deoiled Lecithin

The lecithin which may be used in the coating compositions of the present invention includes all the currently available forms thereof, including the heat stable forms which are admixed with oil, provided that the oil content thereof does not exceed about 25% by weight, and preferably does not exceed about 5% by weight and most preferably does not exceed about 2% by weight. The low oil content lecithin to be used in the present invention, therefore, may also be referred to as deoiled lecithin.

## Admixing of Deoiled Lecithin

The deoiled lecithin is preferably used in the compositions of the present invention in admixture with the polymeric coating material. This provides the most desired sweetness or flavor release results according to the present invention. The deoiled lecithin may, however, also be used in admixture with the intense sweetener, or other flavorant or active ingredient, with such resulting admixture then being coated with the polymeric coating material. Further, the deoiled lecithin may also be concurrently used in both the polymeric coating material and admixed with the intense sweetener or other flavorant or active ingredient.

When the deoiled lecithin is used in the polymeric coating material it is used in an amount of about 2 to 40 and preferably of about 5 to 25, weight % based on the combined weight of the deoiled lecithin and the polymeric coating material. The admixing of the deoiled lecithin and the polymeric coating material is carried at below the decomposition temperature of either component of the admixture, and preferably by melting the coating material and then mixing in the deoiled lecithin.

When the deoiled lecithin is used in admixture with the intense sweetener or other flavorant or other active ingredient it is used in an amount of about 10 to 90, and preferably of about 20 to 65, weight % based on the combined weight of the deoiled lecithin and the intense sweetener or other flavorant or active ingredient. The admixing of the deoiled lecithin and the intense sweetener or other flavorant or other active ingredient is carried out below the decomposition temperature of the various components of the admixture, and by known dry blending procedures.

## Encapsulation Process

The term "IS particles", as used hereinafter refers to particles of the intense sweetener, or other flavorant or other active ingredients, alone, or in admixture with the deoiled lecithin.

The encapsulated contents of the IS particles may include the intense sweetener or other flavorant alone, or in admixture with each other, or either or both of such materials may also be admixed with other additives such as coloring materials and other active ingredients. All of these materials may be dry blended together by known blending processes.

The encapsulating composition, or system, of the present invention, i.e., deoiled lecithin in combination with the film forming coating material, can also be used to encapsulate other solid particulate active materials which are used in products ingested by mammals, including human beings, in general, such as drugs, antacids, breath-fresheners and condiments.

The term active comestible ingredient, as such, as used herein, therefore, means any solid particulate material that may be used as a component of a product that may be orally ingested by a human being or other mammal and including products such as food, confections, chewing gum, medicines and dentifrices.

The term "Coating Material" as used hereinafter refers to the polymeric coating agent, alone, or in admixture with the deoiled lecithin.

The Coating Material is thus used to form an encapsulating coating on the IS Particles in such a way as to provide coated, discrete, IS Particles which have a coating weight of about 10 to 80, and preferably of about 40 to 70, weight % based on the combined weight of the Coating Material and the IS Particles. The IS Particles may be encapsulated by more than one layer of the Coating Material, in accordance with the coating processes described hereinafter. In a further embodiment, the IS Particles may be coated by plural diverse Coating Materials, disposed either in mixture with each other, or in discrete layers.

The IS Particles may be encapsulated with the Coating Material by a variety of coating techniques, including spray drying, coaservation, and the like. Preferably, the IS Particles are encapsulated by a method that operates in similar fashion to fluidized bed coating processes, in that the IS Particles are suspended in an apparatus that creates a strong upward air current or stream in which the IS Particles move. The stream passes through a zone of finely atomized droplets of the Coating Material, after which the thus coated IS Particles pass out of the upward stream and pass downward in a fluidized condition countercurrent to a flow of heated fluidized gas whereupon they are dried and may reenter the upward-moving coating zone for a subsequent discrete coating application. The foregoing method and associated apparatus are known as the Wurster Process. The Wurster Process and its associated apparatus are set forth in detail in the following U.S. Patents, the disclosures of which are incorporated herein by reference: U.S. Pat. No. 3,089,824; U.S. Pat No. 3,117,027; U.S. Pat. No. 3,196,827; U.S. Pat. No. 3,241,520; and U.S. Pat. No. 3,253,944.

The present process may operate at inlet temperatures in the order of about 90° to 125°F, so that only relatively mild heating of the IS Particles takes place while the Coating Material is disposed thereon. The temperature may vary up to the decomposition point of the component(s) of the contents of the IS Particles, and for example, may range as high as 200°F. or higher.

The Coating Material is prepared for use in the present encapsulation method by the formation of a liquid capable of being uniformly atomized. In particular, solutions, dispersions or emulsions of the Coating Material in suitable solvents or dispersing agents may be prepared, depending upon the nature of the Coating Material. The water-insoluble polymeric resins used in the Coating Materials may be prepared as solutions, dispersions or emulsions in appropriate organic solvents such as acetone, lower alcohols such as isopropyl alcohol, and the like. They may also be used as hot melts in the absence of solvent.

The use of deoiled lecithin with the film forming polymer is particularly important, from an encapsulating process point of view, when the encapsulating agent is to be used in a fluid bed type coating process.

The deoiled lecithin, when admixed with the encapsulating agent, enables the resulting encapsulating agent to be used much more readily and efficiently in the fluidized bed coating process. This is unexpected since the deoiled lecithin does not exert a plasticizing effect on the encapsulating agent, such as polyethylene, as evidenced by the fact that addition of the deoiled lecithin does not lower the melting point of the polyethylene.

In a preferred embodiment, encapsulated IS Particles may be prepared under substantially anhydrous conditions where the intense sweetener therein is a material such as aspartame that may be subject to hydrolytic breakdown. By "substantially anhydrous" in accordance with the present invention, it is meant that the IS Particles are encapsulated while in solid form, as distinguished from the disposition of the IS Particles in an aqueous emulsion that might take place if the IS Particles were encapsulated with a Coating Material by the spray drying technique.

In some instances, it may be desirable to add other ingredients such as those having a plasticizing action to the Coating Material to improve the properties of the ultimate coating. Suitable plasticizers would include the glyceryl ester of sebacic acid, diethyl phthalate, glyceryl triacetate, tributyl citrate, acetylated monoglyceride, citric acid ester of monodiglyceride, adipate ester, and others. The plasticizers may be added in known effective amounts within the scope of the invention. Other known materials acceptable for ingestion, may also be utilized herein.

The Coating Materials are projected through an appropriately sized nozzle to form an atomized cloud of Coating Material particles. The Coating Materials may be projected at a rate of flow ranging from about 10 up to about 500 ml/minute and the IS Particles may receive their first coating within 3 to 10 seconds. The time required for the entire process may naturally vary depending upon the extent of coating desired, and can range from 10 minutes to 2 hours. Naturally, the foregoing parameters are for purposes of illustration only, and may vary depending upon the nature of the Coating Material, the nozzle utilized in the coating apparatus and the desired extent of encapsulation.

The encapsulated IS Particles may be prepared in a variety of sizes, and preferably of about 40 to 200 mesh (U.S. Standard mesh sizes).

## Use of Encapsulated IS Particles

When using the encapsulated IS Particles in food and other products enough of the encapsulated IS Particles is used as to provide about 0.05 to 2.0, and preferably about 0.1 to 1.0, weight % of the encapsulated material therein to the end use product. Where the encapsulated material contains, or is, an intense sweetener about 0.0 to 0.7, and preferably about 0.05 to 0.4, weight % of such intense sweetener is employed in this way. Thus, where the encapsulated IS Particles contain a relatively small amount of intense sweetener or other active material therein, more of such IS Particles would be needed to provide the desired level of intense sweetener in the end use product than where the encapsulated IS Particles contained a relatively larger amount of intense sweetener or other active material therein.

In order to provide for a more staged release of the intense sweetener or other active material during the mastication of the end use product in which the encapsulated IS Particles are used, encapsulated IS Particles made with various weights or thicknesses of coatings may be used. Thus, as the end use product is masticated the unencapsulated water soluble additives are first absorbed by the saliva of the masticator and then the encapsulated intense sweetener or other active material will be first released from those encapsulated products having the thinnest coatings, and then progressively, from those of the encapsulated products having progressively larger coating weights or thicknesses. Thus, the staged release of the

5

encapsulated intense sweetener or other active ingredient may be obtained by using a master blend of two or more encapsulated IS Particle based compositions wherein, each of the respective compositions contains a coating weight that differs from the coating weights of the other compositions by about 5 to 50, and preferably by about 10 to 30, percent.

The end use products in which the encapsulated IS Particles may be used include all those solid to pasty products which are masticated in the mouth and which contain sweeteners, and other active ingredients including foods and confection such as candy and chewing gum, as well as toothpaste and chewable medicines.

The encapsulated intense sweetener of the present invention is particularly useful when used in sugarless chewing gum products in combination with sugarless bulk sweeteners such as sugar alcohols, such as sorbitol, sorbitol syrup, mannitol and xylitol and hydrogenated starch hydrolysate. This combination of encapsulated intense sweetener and unencapsulated bulk sugarless sweetener, when used in a sugarless chewing gum product, does not give rise to a hiatus between the up-front flavor burst from the bulk sweetener, and the subsequent prolonged flavor release from the encapsulated intense sweetener that the prior art sugarless products are subject to when chewed by the user thereof.

The following Examples are merely illustrative of the present invention and are not intended as a limitation of the scope thereof.

## Example I

Preparation of Encapsulated Aspartame

A) Preparation of admixture of polyethylene and deoiled lecithin.

Deoiled lecithin (0.345 kilo grams) and polyethylene (3.155 kilo grams) were dry blended together to produce a homogeneous admixture of the two materials, which admixture contained about 9.9% deoiled lecithin and 90.1% polyethylene. The polyethylene used had a melting point of about 187°F. The deoiled lecithin used had an oil content of less than 1 %.

B) Encapsulation of Aspartame

Aspartame (2.3 kilograms) was encapsulated with the 3.5 kilograms of the admixture of polyethylene and deoiled lecithin prepared as described above in Paragraph 1A). The aspartame was in particulate form.

The encapsulation was accomplished by the "so-called" Wurster process using a 9" diameter, 18" high column fluidized bed coating chamber. The fluidizing air temperature at the fluidizing gas inlet of the chamber was about 92-98°F and at the gas outlet was 95 ± 5°F. The aspartame was charged into the chamber, and fluidized and encapsulated in the column using an atomized spray of the molten admixture of deoiled lecithin and polyethylene. The atomized admixture was fed to the column through an atomizer in the base of the column. The encapsulated composition contained 60% of the coating compositions and 40% of the aspartame. The coated material was in the form of discrete particles having an average particle size of about 170 microns.

When attempts are made to coat aspartame with polyethylene, under similar conditions, but without the use of the deoiled lecithin, the resulting particles tend to agglomerate and provide non-uniform, relatively large particles. Further, without the use of the deoiled lecithin the use of the same grade of polyethylene (with 187°F M.P.) requires the use of air heated at an air inlet temperature of about 145-160°F.

The use of the process of the present invention thus facilitates the use, as coating materials, of materials such as polyethylene having relatively high melting points, i.e., materials having higher molecular weight, and thus materials that are tougher and less likely to crack, in coated form, and thus able to provide a more secure coating system. This is particularly advantageous when the flavorant to be coated is one that is moisture sensitive such as aspartame. The more secure is the encapsulating agent, the less likely is it to prematurely crack during storage and use, and expose the moisture sensitive materials to the ambient moisture.

EXAMPLES 2-6

Several chewing gum products were prepared (Examples 2-6 herein) to demonstrate the novel and unobvious results of the present invention. Each chewing gum product was made essentially the same and from the same basic components except for the sweetening agent used therein. The chewing gum products of Examples 2 and 3 were made with APM encapsulated in 40% and 60%, by weight, respectively, of polyethylene (187°F M.P.) as otherwise disclosed in Example 1 above, and without the use of (deoiled) lecithin. The chewing gum product of Example 4 was made with APM encapsulated in 60% by weight of polyethylene (187°F M.P.) and deoiled lecithin as disclosed in Example 1 above. The chewing gum products of Examples 5 and 6 were control products that were made with unencapsulated sodium saccharin and unencapsulated aspartame, respectively.

The compositions of the chewing gum products of such Examples 2 to 6 were thus as follows:

| Chewing Gum Composition Component | Chewing Gum Composition of Example (weight %) | | | | |
|---|---|---|---|---|---|
| Example | 2 | 3 | 4 | 5 | 6 |
| styrene-butadiene based gum base | 29 | 29 | 29 | 29 | 29 |
| powdered sorbitol | 43.17 | 43.17 | 43.0 | 43.4 | 43.3 |
| sorbitol solution, 70% solids | 21.0 | 21.0 | 21.0 | 21.0 | 21.0 |
| glycerine | 5.0 | 5.0 | 5.0 | 5.0 | 5.0 |
| peppermint flavor | 1.0 | 1.0 | 1.0 | 1.0 | 1.0 |
| lecithin (with 50% oil) ** | 0.5 | 0.5 | 0.5 | 0.5 | 0.5 |
| Na. saccharin | – | – | – | 0.1 | – |
| aspartame | 0.33 * | 0.33 * | 0.5 * | – | 0.2 |

\* as encapsulated material, as disclosed above.
\*\* softener grade of lecithin.

Each chewing gum product was made by the same process, as follows:

| Step in Process | Activity in Process Step |
|---|---|
| 1. | Fully melt gum base to 220°F. Cool to 185°F. |
| 2. | Add softener grade of lecithin (with 50% oil) and mix 3 minutes. |
| 3. | Add powdered sorbitol and flavor on top. Mix 3 minutes. |
| 4. | Add sorbitol syrup (solution). |
| 5. | Add glycerine and intense sweeteners. Mix until smooth (about 3 minutes). |

Each formulation was made in the form of about a 15 pound or 7 kilogram lot, prior to being formed into stick configuration.

Samples of each of the chewing gum products made above in Examples 2 to 6 were concurrently tested within 60 days after they had been made (and stored at ambient R.H., 68-73°F) by a panel of six trained panelists selected for their taste acuity. All of the panelists had previously participated in similar tests and were familiar with the evaluation of chewing gum.

Each panelist received in each test session a coded three gram stick of chewing gum. Panelists were asked to evaluate each chewing gum sample at initial burst time, 0 to 10 seconds, and then at 0.5, 1, 1.5, 2, 3, 4, 5, 6, 7 and 8 minutes of chewing for the sweetness retention and flavor retention properties of the samples. Each panelist was required to chew each sample of gum at a chew rate of about 50 chews/minutes.

Each sample of chewing gum was tested once by each panelist. The panelist was asked to evaluate each sample by assigning a rating value over a range of 1 to 7 to each of the two properties being tested, and in accordance with the following scale of proposed values for such properties, and at the end of each interval of test time (as shown in Table I below).

## TABLE I
### Scale of Value

| Value Rating | Significance Relative to Property being Evaluated |
|---|---|
| 1 | just detectable (threshold level) |
| 3 | slight/low |
| 5 | moderate |
| 7 | strong/high |

After comparatively testing each product once for sweetness and flavor retention properties, the composite numerical ratings assigned by the panelists to each product were compiled and were as follows, as shown in Tables II and III.

TABLE II

Composite Numerical Ratings

For Sweeteners Retention For

Products of Examples 2-6

| Timed Interval of Rating, Minutes | Product of Example | 2 | 3 | 4 | 5 | 6 |
|---|---|---|---|---|---|---|
| initial burst (0-10 seconds) | | 0.6 | 0.9 | 0.8 | 0.8 | 1.2 |
| 0.5 | | 5 | 4.9 | 5.4 | 5.2 | 5.7 |
| 1.0 | | 5.8 | 5.4 | 6.0 | 5.8 | 6.0 |
| 1.5 | | 5.4 | 5.3 | 5.6 | 5.1 | 5.5 |
| 2 | | 5.0 | 5.3 | 5.1 | 4.8 | 5.0 |
| 3 | | 4.6 | 4.0 | 4.5 | 3.8 | 4.4 |
| 4 | | 4.6 | 3.4 | 4.2 | 3.2 | 3.8 |
| 5 | | 4.5 | 3.4 | 4.4 | 2.5 | 3.6 |
| 6 | | 4.0 | 3.4 | 4.2 | 2.5 | 3.0 |
| 7 | | 4.0 | 3.4 | 4.2 | 2.5 | 3.0 |
| 8 | | 4.0 | 3.4 | 4.2 | 2.5 | 3.0 |

## Table III

### Composite Numerical Ratings For Peppermint
### Flavor Retention For Products of Examples 2-6

| Timed Interval of Rating, Minutes | Product of Example | 2 | 3 | 4 | 5 | 6 |
|---|---|---|---|---|---|---|
| initial burst (0-10 seconds) | | 0.4 | 0.5 | 0.5 | 0.6 | 0.6 |
| 0.5 | | 3.8 | 4.4 | 3.8 | 4.0 | 4.6 |
| 1.0 | | 4.6 | 4.5 | 5.2 | 4.6 | 5.0 |
| 1.5 | | 4.4 | 4.5 | 4.6 | 4.2 | 5.0 |
| 2.0 | | 3.8 | 4.2 | 4.4 | 3.6 | 4.2 |
| 3.0 | | 3.4 | 3.9 | 4.0 | 2.8 | 3.6 |
| 4.0 | | 3.4 | 3.8 | 3.5 | 2.4 | 3.6 |
| 5.0 | | 3.4 | 3.3 | 3.4 | 1.8 | 3.2 |
| 6.0 | | 3.4 | 2.8 | 2.8 | 1.8 | 3.0 |
| 7.0 | | 3.4 | 2.2 | 2.8 | 1.8 | 3.0 |
| 8.0 | | 3.4 | 2.2 | 2.8 | 1.8 | 3.0 |

The numerical results shown in Tables II and III are also shown graphically in Figures I and II respectively. These results indicate that, as shown graphically in Figure I, the product made according to the present invention, that of Example 4, had long term sweetness release properties that were equal to or better than the long term sweetness properties of the products of Example 2 and 3 which contained aspartame encapsulated in polyethylene, but without the use of deoiled lecithin therewith. In fact, the product of the present invention provided higher sweetness release properties over approximately the last $3\frac{1}{2}$ minutes of the test run, than the product of Example 2 that contained encapsulated APM that was encapsulated in a significantly lower (40%) weight % of coating material than was the encapsulated APM used in the Example 4 product of the present invention that was encapsulated in 60% polyethylene. As compared to the product of Example 3, which also contained APM encapsulated in a 60% weight of coating matter, as was the encapsulated product of the present invention, the latter product, that of Example 4, showed a significantly higher sweetness release rating over about the last $5\frac{1}{2}$ minutes of the test period than did the product of Example 3.

The product of example 4 also provided even significantly higher sweetness release ratings over the last $5\frac{1}{2}$ minutes of the test period than were provided by the use of the unencapsulated sweeteners of Examples 5 and 6.

The product of Example 4 also had approximately the same, or better than the, sweetness retention rating of the other four test samples during approximately the first three minutes of the test period. In fact, it had higher or approximately the same sweetness retention ratings over most of the entire test period, than either of the two products (of Examples 2 and 3) made with aspartame encapsulated in polyethylene at the 40% and 60% weight levels.

The results shown graphically in Figure II indicate that the product of the present invention, that of Example 4, had a significantly higher flavor retention rating over the last two minutes of the test period than was provided by the product of Example 3 which contained APM encapsulated (without deoiled lecithin) in the same weight % coating (60%) as was used for the aspartame of the Example 4 product. The product of Example 4 also had a significantly higher flavor retention rating than was provided by the product of Example 5 which contained unencapsulated sodium saccharin. The products made with either unencapsulated aspartame (Example 6) or aspartame encapsulated in 40% polyethylene (without deoiled lecithin-Example 2) had higher flavor retention ratings over the last 2-3 minutes than did the product of Example 4, that of the present invention.

Thus, the coating system of the present invention allows one to obtain both improved long term sweetness and flavor retention properties in chewing gum made with intense sweetener encapsulated in film forming polymer such as polyethylene, at a given level of coating weight, by formulating the coating, as taught herein, with deoiled lecithin.

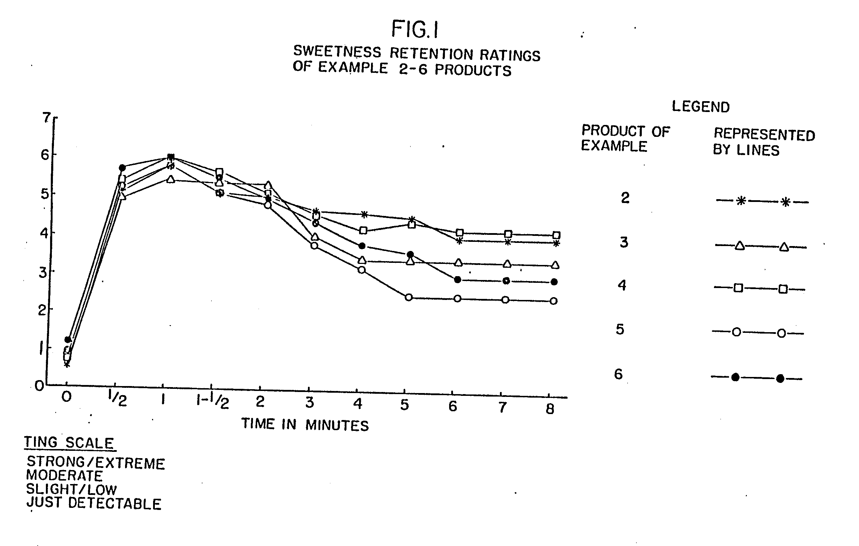

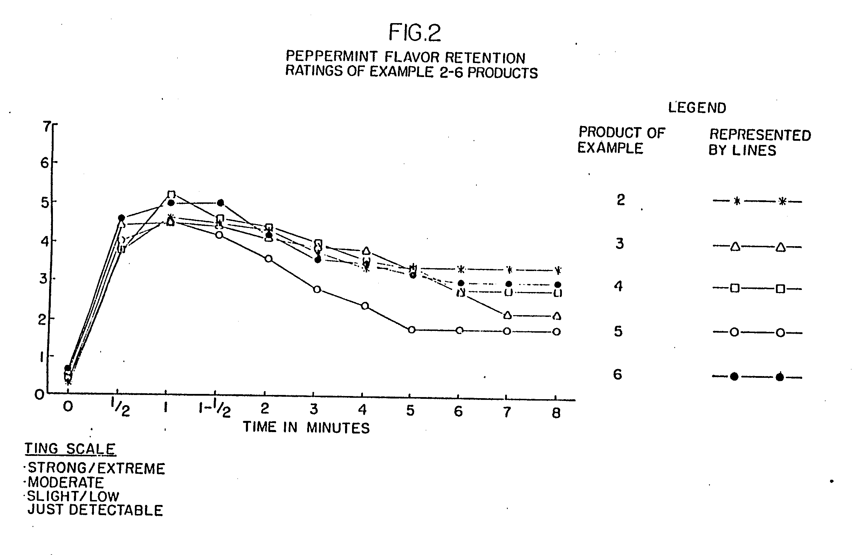

## Claims

1. An encapsulated composition comprising at least one active comestible ingredient encapsulated in a water insoluble film forming polymer material and wherein said active comestible ingredient and/or said polymer material are admixed with deoiled lecithin.

2. Composition as in claim 1 in which said active comestible ingredient is a flavorant.

3. Composition as in claim 2 in which said flavorant is an intense sweetener.

4. Composition as in claim 3 in which said intense sweetener comprises aspartame, acid saccharin or a salt thereof.

5. Composition as in any of claims 1 to 4 wherein the film is an olefin polymer.

6. Composition as in claim 5 in which the polyolefin comprises polyethylene.

7. A composition as in any of claims 2 to 6 wherein the flavorant is encapsulated with about 20 to 80 weight % of said polymer material, based on the total weight of said composition.

8. A composition as in claim 7 wherein about 40 to 70 weight % of said polymer material is employed.

9. A composition according to any of claims 2 to 8 for use in accelerating during oral mastication the flavor perception of the flavorant.

10. An orally ingestible product comprising the encapsulated active comestible ingredient of any of claims 1 to 8.

11. An orally ingestible product as in claim 10 which is chewing gum.

12. A process for encapsulating an active comestible ingredient with water insoluble film forming polymer material the improvement comprising admixing said active comestible ingredient and/or said polymer material with deoiled lecithin prior to said encapsulation.

13. A process as in claim 12 in which, when admixed with said active comestible ingredient, said deoiled lecithin is employed in an amount of about 10 to 90 weight %, based on the total weight of the encapsulated composition.

14. A process as in claim 12 in which, when admixed with said polymer material, said deoiled lecithin is employed in an amount of about 20 to 80 weight %, based on the total weight of the encapsulated composition.

15. A process as in any of claims 1 to 14 in which said encapsulating is conducted in a fluidized bed process.

Claims for the following Contracting States: AT; SP.

1. Process for preparing an encapsulated composition comprising at least one active comestible ingredient encapsulated in a water insoluble film forming polymer material which comprises admixing said active comestible ingredient and/or said polymer material with deoiled lecithin and then encapsulating said active comestible ingredient with said polymer material.

2. A process as in claim 1 in which, when admixed with said active comestible ingredient, said deoiled lecithin is employed in an amount of about 10 to 90 weight %, based on the total weight of the encapsulated composition.

3. A process as in claim 1 in which, when admixed with said polymer material, said deoiled lecithin is employed in an amount of about 20 to 80 weight %, based on the total weight of the encapsulated composition.

4. A process as in any of claims 1 to 3 in which said encapsulating is conducted in a fluidized bed process.

5. Process as in any of claims 1 to 4 in which said active comestible ingredient is a flavorant.

6. Process as in claim 5 in which said flavorant is an intense sweetener.

7. Process as in claim 6 in which said intense sweetener comprises aspartame, acid saccharin or a salt thereof.

8. Process as in any of claims 1 to 7 wherein the film is an olefin polymer.

9. Process as in claim 8 in which the polyolefin comprises polyethylene.

10. A process as in any of claims 5 to 9 wherein the flavorant is encapsulated with about 20 to 80 weight % of said polymer material, based on the total weight of said composition.

11. A process as in claim 10 wherein about 40 to 70 weight % of said polymer material is employed.

12. Use of a composition prepared according to any of claims 5 to 11 for accelerating during oral mastication the flavor perception of the flavorant.

FIG.1
SWEETNESS RETENTION RATINGS
OF EXAMPLE 2-6 PRODUCTS

LEGEND

| PRODUCT OF EXAMPLE | REPRESENTED BY LINES |
|---|---|
| 2 | —*——*— |
| 3 | —△——△— |
| 4 | —□——□— |
| 5 | —○——○— |
| 6 | —●——●— |

TIME IN MINUTES

TING SCALE
STRONG/EXTREME
MODERATE
SLIGHT/LOW
JUST DETECTABLE

0 252 374

## FIG.2

### PEPPERMINT FLAVOR RETENTION
### RATINGS OF EXAMPLE 2-6 PRODUCTS

LEGEND

| PRODUCT OF EXAMPLE | REPRESENTED BY LINES |
|---|---|
| 2 | —*——*— |
| 3 | —△——△— |
| 4 | —□——□— |
| 5 | —○——○— |
| 6 | —●——●— |

TIME IN MINUTES

TING SCALE
·STRONG/EXTREME
·MODERATE
·SLIGHT/LOW
JUST DETECTABLE

0 252 374

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | US-A-3 962 416  (S. KATZEN)<br><br>* Claim 1; column 6, lines 20-29; column 1, lines 44-50 * | 1,2,7, 8,10, 11 | A 23 P   1/04<br>A 23 L   1/22<br>A 23 L   1/236<br>A 23 G   3/30 |
| | --- | | |
| X,Y | WO-A-8 503 414  (S.C.M.)<br><br>* Claims  1,2,5,10,11;  page  4, line 30; example 1X * | 1-3,7, 8,10-12 | |
| | --- | | |
| X,Y | EP-A-0 067 595  (WARNER-LAMBERT)<br>* Claims 1-10; example  11;  page 10, lines 4-6; page 11, line 14 - line 26; page 10, lines 28-31 * | 1-13 | |
| | --- | | |
| X | US-A-3 117 027  (LINDLOF et al.)<br>* Claim 1 * | 15 | **TECHNICAL FIELDS SEARCHED (Int. Cl.4)**<br><br>A 23 P<br>A 23 L<br>A 23 G |
| | ----- | | |

The present search report has been drawn up for all claims

| Place of search | Date of completion of the search | Examiner |
|---|---|---|
| THE HAGUE | 21-10-1987 | VAN MOER A.M.J. |